# EUROPEAN PATENT APPLICATION

(11) **EP 2 568 527 A1**
(43) Date of publication of application: **13.03.2013**
(21) Application number: 11180981.0
(22) Date of filing: 12.09.2011
(51) Int. Cl.: H01M 16/00, H01M 4/58, H01M 4/505, H01M 4/587

(54) **Hybrid battery module**

(71) Applicant: Exa Energy Technology Co., Ltd., Taichung City (TW)
(72) Inventor: Chen, Han-Chen, Taichung City (TW); Ho, Lun-Chieh, 407 Taichung City (TW); Chao, Fang-Hui, Taichung City (TW)
(74) Representative: Lang, Christian

(57) **Abstract**

A hybrid battery module of the present invention includes a lithium iron battery pack and a lithium manganese battery pack. The lithium iron battery pack includes at least one lithium iron battery which is electrically connected in series, and the lithium iron battery has an anode and a cathode. The lithium manganese battery pack includes at least one lithium manganese battery which is electrically connected in series, and the lithium manganese battery has an anode and a cathode. The lithium iron battery pack and the lithium manganese battery pack are electrically connected in parallel to each other. Thereby, the hybrid battery module has high discharge efficiency, high electric capacity, a small volume and a light weight. Furthermore, the production cost of the present invention is lower than a complete lithium iron battery pack, and the hybrid battery module is much safer to be used than a complete lithium manganese battery pack.

## Description

### BACKGROUND OF THE INVENTION

### Field of the Invention

The present invention relates to a battery module, and more particularly to a hybrid battery module for an engine.

### Description of the Prior Art

Conventionally, a lead acid battery has been used as a power battery for vehicles like cars or bikes. The lead acid battery displays advantages of a high electromotive force, a wide operating temperature, a simple structure, a mature technology, a low cost, and etc. In contrast, the lead acid battery has a large volume, a heavy weight, a large voltage drop, and environmental unfriendly material, and etc.

Therefore, there has a lithium iron phosphate battery so as to replace the lead acid battery. The lithium iron phosphate battery has high discharge efficiency, a small volume, a light weight, high electric capacity, and other advantages for being a vehicle battery module. And the lithium iron phosphate battery is the safest battery among all the other vehicle batteries. However, the lithium iron phosphate battery is difficult to be manufactured in that the yield rate of sintering is low. As a result, the production cost of the lithium iron phosphate battery is high.

In light of the cost, there has a lithium manganese battery for replacement. The manganese material is abundant and cheap, and the lithium manganese battery is easier to be manufactured than the lithium iron phosphate battery. In addition, the lithium manganese battery takes the fewer time for recharging than lithium iron phosphate battery, and it has the same advantages as the lithium iron phosphate battery of a large discharge rate, a high electric capacity, a small volume, and a light weight. Nevertheless, the material of the lithium manganese battery is prone to have lattice distortion in deep discharge process, especially under a higher temperature, the bonding between manganese and oxygen may broken to release the oxygen and then even lead to an explosion. Furthermore, the lithium manganese lattice may slowly dissolve into electrolyte under a high temperature. Consequently, the lithium manganese battery requires extra safety means to improve its safety.

Therefore, the present invention is arisen to obviate or at least mitigate the above mentioned disadvantages.

### SUMMARY OF THE INVENTION

The main object of the present invention is to provide a hybrid battery module which discharges efficiently, has a reasonable price, has a small volume, and is safe to be used.

To achieve the above and other objects, a hybrid battery module of the present invention includes a lithium iron battery pack and a lithium manganese battery pack. The lithium iron battery pack comprises at least a lithium iron battery which is electrically connected in series and has an anode and a cathode. The lithium manganese battery pack comprises at least one lithium manganese battery which is electrically connected in series and has an anode and a cathode. The lithium iron battery pack and the lithium manganese battery pack are electrically connected in parallel to each other.

Thereby, the hybrid battery module of the present invention mainly joins the lithium iron battery pack and the lithium manganese battery pack in parallel electrical connection so as to replace a lead acid battery pack, a complete lithium iron battery pack or a complete lithium manganese battery pack. The hybrid battery module not only has advantages of high discharge efficiency, high capacity, small volume and light weight, but also requires the lower cost for production than a complete lithium iron battery pack and is safer to be used than a complete lithium manganese battery pack.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

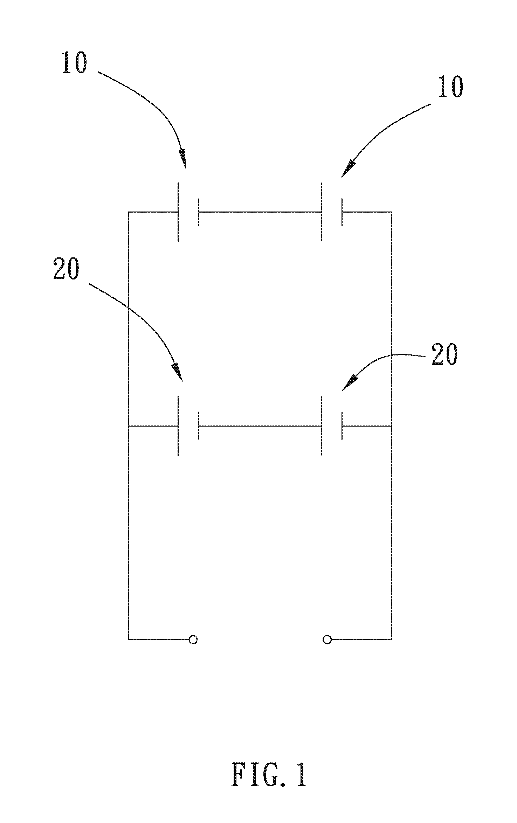

FIG 1 is a circuit diagram showing a preferred embodiment of the present invention.

### DETAILED DESCRIPTION OF THE PREFERRED EMBODIMENTS

The present invention provides a hybrid battery module which is adapted to supply power for conventional vehicle engines, the engines of large generators, or uninterruptible power supply, or the engines of electric vehicles. Please refer to FIG 1. The hybrid battery module comprises a lithium iron battery pack and a lithium manganese battery pack. The lithium iron battery pack includes at least one lithium iron battery 10 which is electrically connected in series, and the lithium iron battery 10 has an anode and a cathode. The lithium manganese battery pack includes at least one lithium manganese battery 20 which is electrically connected in series, and the lithium manganese battery 20 has an anode and a cathode. The lithium iron battery pack and the lithium manganese battery pack are electrically connected in parallel to each other. The quantity of the lithium iron batteries and the lithium manganese batteries in the FIG. 1 is intended to be illustrative only, and should be understood not to limit the scope of the present invention.

To be specifically, the anode of the lithium iron battery pack is made of a lithium iron compound. Preferably, the lithium iron compound is lithium iron phosphate. The anode of the lithium manganese battery pack is made of a lithium manganese compound, and the cathode of the lithium manganese battery pack is made of lithium titanate or graphite, wherein the lithium titanate is the preferable material, and the graphite could be natural or artificial.

Specifically, the hybrid battery module joins the lithium iron battery pack and the lithium manganese battery pack in parallel electrical connection so as to replace the lead acid battery pack. Compared to the lead acid battery pack, the hybrid battery module has the advantages of high discharge efficiency, high capacity, small volume and light weight.

Furthermore, it may be much safer to replace the lead acid battery pack with a complete lithium iron battery pack. Nevertheless, it is difficult to manufacture the lithium iron batteries, so the cost of the lithium iron batteries is very high. But if the lead acid battery pack is replaced by a complete lithium manganese battery pack, it will be unsafe to be used, compared with the lithium iron battery, even though the lithium manganese batteries can be produced with lower cost and have the characteristics of rapidly recharging or the like. In view of the above mentioned problems, the present invention joins the lithium iron battery pack and the lithium manganese battery pack in parallel electric connection in order to replace the lead acid battery pack, a complete lithium iron battery pack or a complete lithium manganese battery pack. As a result, the hybrid battery module not only keeps the characteristics of high discharge efficiency, high capacity, small volume, and light weight which are the advantages shared by the complete lithium iron battery pack and the complete lithium manganese battery pack. Simultaneously, the cost for manufacturing the hybrid battery module is lower than the complete lithium iron battery pack, and the safety is higher than a complete lithium manganese battery pack. Moreover, customers always want to buy a product which has high performance, is at an affordable price and safe to be used. The hybrid battery module of the present invention does include the above advantages, so it is competitive in battery market.

Also, the electrical apparatuses which are joined with a battery module have a certain voltage, and the lead acid battery pack usually fails to supply enough voltage for the apparatuses due to its large voltage drop. Therefore, the cathode of the lithium manganese battery pack is made of lithium titanate so as to decrease the range of the voltage drop. Consequently, the present invention can supply enough voltage and improve the drawback of the lead acid battery pack which has large voltage drop.

## Claims

1. A hybrid battery module, comprising a lithium iron battery pack (10) and a lithium manganese battery pack (20), the lithium iron battery pack (10) comprising at least one lithium iron battery which is electrically connected in series, the lithium iron battery having an anode and a cathode, the lithium manganese battery pack (20) comprising at least one lithium manganese battery which is electrically connected in series, the lithium manganese battery having an anode and a cathode, the lithium iron battery pack (10) and the lithium manganese battery pack (20) being electrically connected in parallel to each other.

2. The hybrid battery module of claim 1, wherein the cathode of the lithium manganese battery is made of lithium titanate.

3. The hybrid battery module of claim 1, wherein the cathode of the lithium manganese battery is made of graphite.

4. The hybrid battery module of claim 3, wherein the graphite is natural graphite.

5. The hybrid battery module of claim 3, wherein the graphite is artificial graphite.

6. The hybrid battery module of claim 1, wherein the anode of the lithium iron battery is made of lithium iron phosphate.
